# EUROPEAN PATENT SPECIFICATION

(11) **EP 3 511 741 B1**
(45) Date of publication and mention of the grant of the patent: **04.11.2020**
(21) Application number: 18151077.7
(22) Date of filing: 10.01.2018
(51) Int. Cl.: G01S 19/24, G01S 19/21, G01S 19/22

(54) **POSITIONING RECEIVER**
POSITIONIERUNGSEMPFÄNGER
RÉCEPTEUR DE POSITIONNEMENT

(43) Date of publication of application: 17.07.2019
(73) Proprietor: Intel IP Corporation, Santa Clara, CA 95054 (US)
(72) Inventor: FFOULKES-JONES, Geraint, Daventry, Nottinghamshire NN11 8YL (GB); ZHANG, Qiang, Rugby, Warwickshire CV22 7PX (GB); RAMAKRISHNAN, Anjan, Cupertino, CA 95014 (US)
(74) Representative: Viering, Jentschura & Partner mbB Patent- und Rechtsanwälte

(56) References cited:
- US-A- 5 768 319
- US-A1- 2008 111 736
- US-A1- 2010 134 349
- US-A1- 2012 051 402

## Description

### FIELD

The disclosure relates to a positioning receiver, such as a Global Navigation Satellite System (GNSS) receiver and methods for determining positioning data, in particular positioning data determined based on confidence values of data bits of the navigation message data packet.

### BACKGROUND

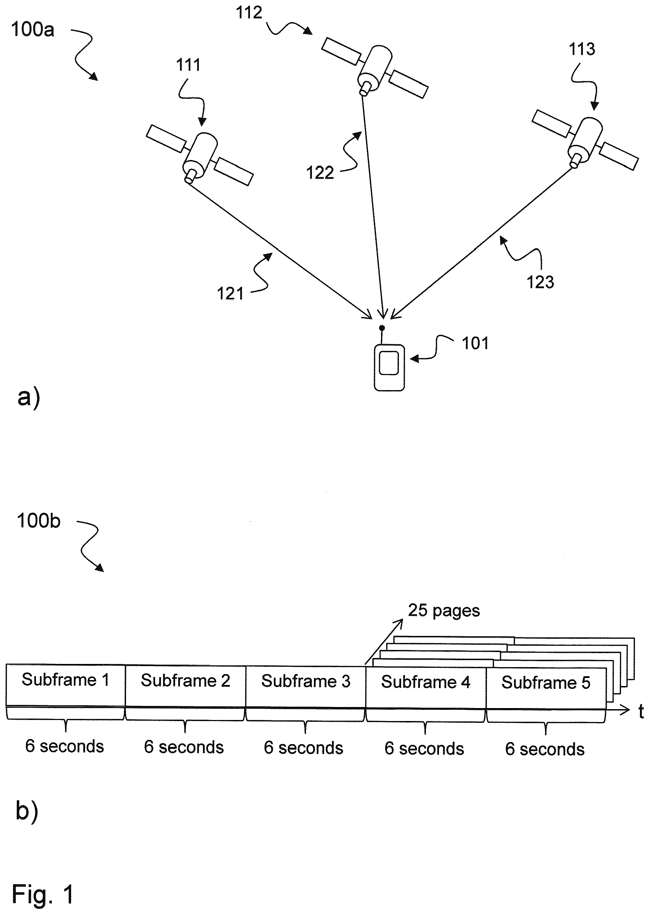

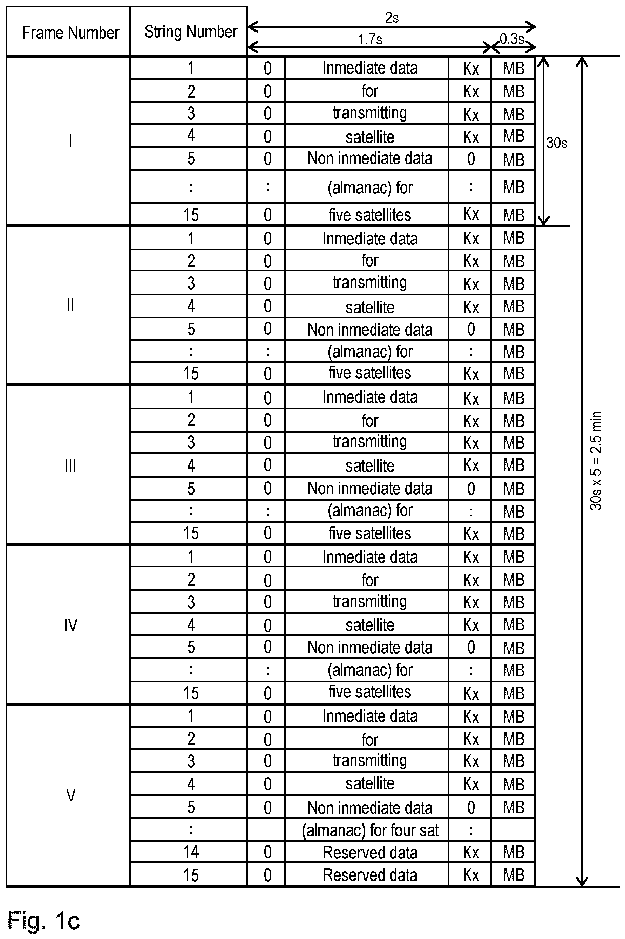

The Global Navigation Satellite System (GNSS) receiver decodes GNSS satellite transmitted data to compute user position, velocity and time. Decoding the data at low signal strength is one of the key aspects of the receiver. The data integrity in the Global Navigation Satellite System (GNSS) is governed by parity strings and is appended with the data. The parity algorithm is designed to take care of infrequent errors seen in good SNR conditions. Historically, GNSS receivers were designed to work in open sky environments, under good SNR conditions. Under these conditions, the parity provided sufficient check on the data. With GNSS receivers becoming integral part of a mobile device 101 as shown in Fig. 1, the receiver is now expected to work at very low SNR. Poor antenna, cheaper clock, signal fading, signal obscurations, multipath and reflections make the data decode task even tougher and less reliable. It is expected that the receiver produces usable data at very low input power. The parity algorithm starts producing false positives. Though the data packet is broken, the parity algorithm fails to identify it and declares that the data is usable. An incorrect data set can cause the GNSS receiver to produce incorrect user position and velocity, system lock up, unstable system. US 2010/0134349 A1 discloses a system for improving the sensitivity of satellite data decode in a satellite navigation receiver. The improved sensitivity is achieved, inter alia, through reducing the number of data bits to be decoded and improving the probability of seeing single bit decoding error in an ephemeris word.

In the disclosure, techniques are presented to improve the fidelity of the decoded data in a positioning receiver, such as GNSS receiver under weak and unfavorable signal conditions.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.
Fig. 1a is a schematic diagram illustrating an exemplary positioning system, such as Global Navigation Satellite System (GNSS) 100a.
Fig. 1b is a schematic diagram illustrating an exemplary navigation message data packet 100b according to a GPS system.
Fig. 1c is a schematic diagram illustrating an exemplary navigation message data packet according to a GLONASS system.
Fig. 2 is a block diagram illustrating an exemplary GNSS receiver 200 according to the disclosure.
Fig. 3 is a block diagram illustrating an exemplary part of the measurement unit (MU) that decodes the data and computes the confidence of the decoded data bits 300 of a GNSS receiver according to the disclosure.
Fig. 4 is a block diagram illustrating an exemplary part of the positioning unit (PE) 400 of a GNSS receiver that uses the decoded data, parity and confidence of the decoded data according to the disclosure.
Fig. 5 is a block diagram illustrating an exemplary GNSS receiver 500 according to the disclosure.
Fig. 6 is a schematic diagram illustrating an exemplary method 600 for determining positioning data according to the disclosure.
Fig. 7 is an exemplary performance diagram 700 illustrating exemplary probability of detection of bad data packet by a GNSS receiver 200 according to the disclosure.
Fig. 8 is an exemplary performance diagram 800 illustrating probability of false alarm of bad data packet by a GNSS receiver 200 according to the disclosure.

### DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims.

The following terms, abbreviations and notations will be used herein:
- GNSS:: Global Navigation Satellite System
- SV:: Satellite Vehicle
- I:: In-phase component
- Q:: Quadrature component
- SNR:: Signal-to-Noise Ratio
- MU, ME:: Measurement Unit or Measurement Engine
- PU, PE:: Positioning Unit or Positioning Engine
- GPS:: Global Positioning System

It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The techniques described herein may be implemented in positioning receivers, such as GNSS receivers, GNSS chipsets or GNSS combo chips, stand-alone GNSS devices, embedded GNSS systems or GNSS receivers implemented in mobile devices such as Smartphones, tablets, wearable devices, health monitoring systems, drones, automobiles, laptops and computers and/or WiFi devices.

These devices may operate in wireless communication networks or stand-alone. The communication networks may be implemented based on mobile communication standards such as LTE, in particular LTE-A and/or OFDM and successor standards such as 5G, or based on high speed communication standards from the 802.11 family according to the WiFi alliance, e.g. 802.11ad and successor standards. The GNSS devices described below may be implemented in electronic devices such as cellular handsets and mobile or wireless devices. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

A main idea of the disclosure is to use a confidence value for the bits of a navigation message data packet in order to detect false positives having passed the parity check. By detecting such false positives, fidelity of the positioning or GNSS receiver can be improved and signal delay can be reduced.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

Fig. 1a illustrates an exemplary positioning system, such as Global Navigation Satellite System (GNSS) 100a, Fig. 1b illustrates an exemplary navigation message data packet 100b according to a GPS system and Fig. 1c illustrates an exemplary navigation message data packet according to a GLONASS system.

The GNSS system 100a includes a mobile station 101 with a GNSS receiver that receives GNSS satellite transmitted navigation messages 121, 122, 123 from at least three satellite vehicles 111, 112, 113. The GNSS receiver processes the satellite transmitted navigation messages 121, 122, 123 to provide respective navigation message data packets. An exemplary structure of such navigation message data packets is depicted in Figure 1b for a GPS system and in Figure 1c for a GLONASS system. In GLONASS (see Figure 1c), the field indicated as KX is the parity.

The GNSS navigation (NAV) messages usually consist of two parts: immediate (primarily ephemeris) and non-immediate (primarily almanac) data. The immediate data is repeated at a much shorter interval than the non-immediate data, and expires much sooner than the non-immediate data. Taking GPS as an example, the civilian navigation (CNAV) messages consist of five sub-frames with each lasting six seconds, as depicted in Figure 1b. The first three subframes provide the ephemeris, with the content repeated every 30 seconds and updated generally every two hours, while the last two subframes provide the almanac for each satellite in 25 pages, with the content updated nominally every six days (according to the GPS Interface Specifications document), but updates can be daily.

The position fix sequence by a standalone GNSS User Equipment (UE) normally consists of signal acquisition, tracking, bit synchronization, frame synchronization, ephemeris downloading, measurements taking and position computation. After powering on of GNSS receiver, signal acquisition usually takes only a few hundred milliseconds for a GPS device in open-sky environments. However, under weak signal conditions, signal acquisition may take much longer, for example a few tenths of seconds. Once the signal is acquired, the tracking loop is activated, and immediately after the signal is pulled in the process of data-bit synchronization is started. This process takes a few hundred milliseconds to several seconds depending on signal strength and algorithm efficiency. In a stable tracking status, the navigation bits are collected sequentially one by one. Collecting a complete copy of a GPS ephemeris takes minimum 18 seconds and up to 36 seconds if acquired at unfavorable place in a sub-frame, in open-sky environments. However, itmay take minutes or even much longer in weak signal environments due to an increased bit error rate (BER). As soon as the ephemeris downloading from three to four satellites is completed and the measurements are made, the user position fix usually can be obtained immediately. Therefore, in weak signal environments, the obstacles to fast time-to-first-fix (TTFF) are primarily signal acquisition and ephemeris downloading, and in open-sky environments the obstacle mainly lies in the time needed for ephemeris downloading.

The techniques described in this disclosure improve fidelity of NAV messages 100b due to applying a confidence value for bits of the NAV message data packets as described hereinafter.

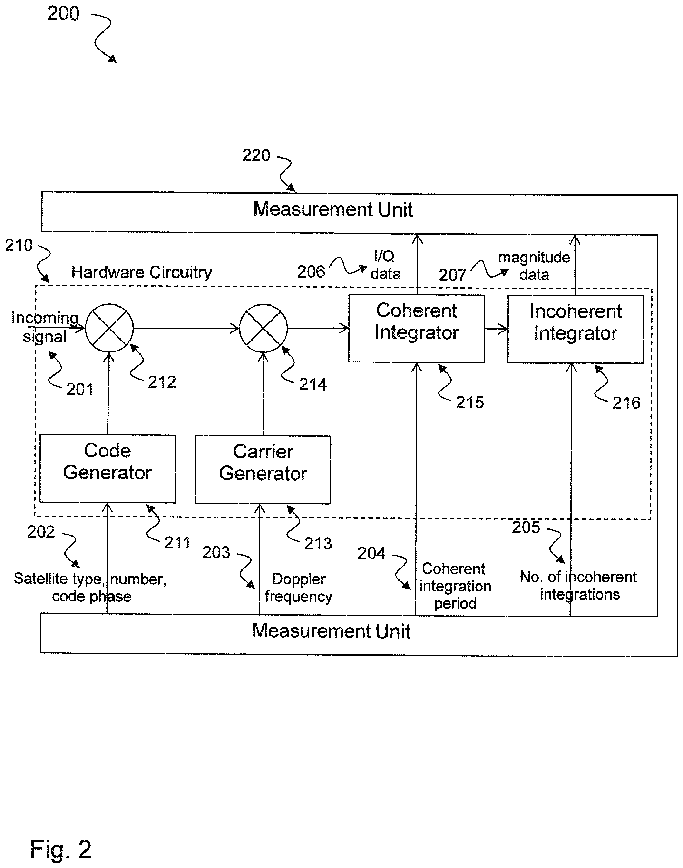

Fig. 2 is a block diagram illustrating an exemplary GNSS receiver 200 according to the disclosure. The GNSS receiver 200 includes an input signal processing block 210, a measurement unit (MU) and a positioning unit (PU) also denoted as positioning engine (PE) (not depicted in Fig. 2). The input signal processing block 210 receives an incoming signal 201 that may correspond to one of the satellite transmitted signals 121, 122, 123 described above with respect to Fig. 1a. The incoming signal 201 may have a structure as described above with respect to Fig. 1b.

In the input signal processing block 210 that may be implemented by hardware logic, the incoming signal 201 (received from antenna and RF front-end, not depicted in Fig. 2) is despread 212 by a code generated by code generator 211 and Doppler wiped off by a carrier generated by carrier generator 213 before passing a coherent integrator 215 and an incoherent integrator 216. The code generator 211 generates the code based on satellite type, number and code phases 202 provided by measurement unit 220 also denoted as measurement engine (ME). These parameters 202 may be predefined and available to MU 220. The carrier generator 213 generates the carrier based on Doppler frequency 203 that is provided by measurement unit 220. The coherent integrator 215 performs coherent integration of the decoded and demodulated incoming signal 201 based on a coherent integration period 204 as provided by MU 220. The incoherent integrator 216 performs incoherent integration of the decoded and demodulated incoming signal 201 based on a number of incoherent integrations 205 as provided by MU 220. The coherent integrator 215 obtains I/Q data 206, i.e. bitwise in-phase (I) data and quadrature (Q) data over coherent integration period 204 of the integrated despread Doppler wiped off incoming signal 201 which is provided to the MU 220. The I data and Q data are integrated over one data bit period according to the coherent integration period 204. The incoherent integrator 216 obtains magnitude data 216 which is provided to the MU 220.

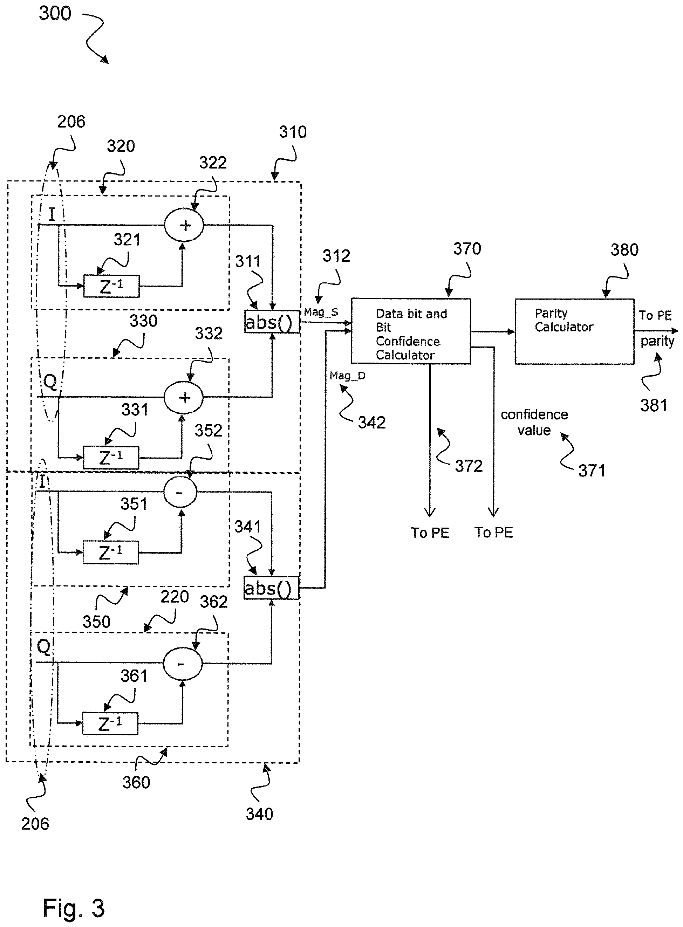

The Measurement Unit (MU) component 220 and the input signal processing component 210 of the GNSS receiver 200 acquires and tracks the signal 201 and generates pseudo-range and Doppler measurements. It also demodulates and decodes the satellite transmitted Navigation message data bits. The Position Unit (PU) consumes the measurements and data to compute user position and velocity. During the demodulation of the bits in ME, a confidence value is computed for each bit, e.g. as described below with respect to Fig. 3. The decoded bits, along with confidence value, are sent to the Position Unit (PU). If the parity has passed and all bits have good confidence, the PE readily uses it. If the parity has passed and if some of the bits have low confidence, the PE doesn't use the data immediately. Ideally, the PE would like to use the data immediately to give a faster time to first user position and velocity fix. In this situation, it will be risky to use the data immediately.

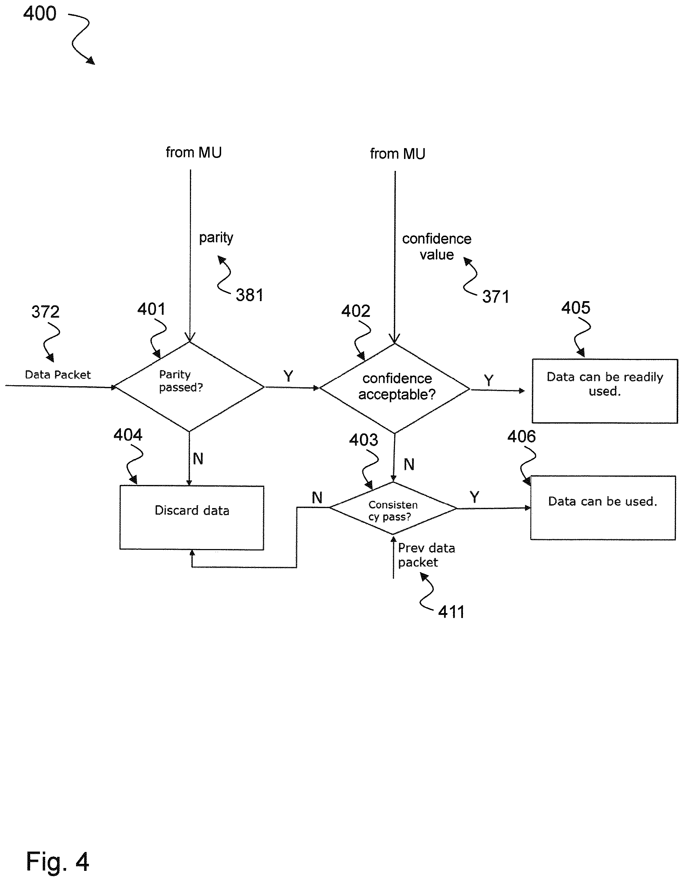

The PE uses the fact that satellite transmitted data is periodic for the above cases. Some of the data repeats itself every 30s over next 30 minutes to 2 hours. The PE waits for a similar packet and does a consistency check with the earlier data, e.g. as described below with respect to Fig. 4. If the earlier data agrees with the recent data, the data is used, else the earlier data is discarded by the PE and it continues to wait until a matching pair is found. On the other hand, the PE would like to use the data as quickly as possible to give a faster position. Thus the scheme allows the PE to use the bits readily at high signal level but use it conservatively at low signal levels.

Fig. 3 is a block diagram illustrating an exemplary part of the measurement unit (MU) 300 that demodulates data bit, calculates parity and bit confidence of a GNSS receiver according to the disclosure. The ME 300 may correspond to the MU 220 described above with respect to Fig. 2. The ME 300 receives I/Q data 206 as processed by the input signaling block 210 described above with respect to Fig. 2 as input. In ME 300, a confidence value is computed for each bit of I/Q data 206 input signal. The ME 300 includes a sum path 310 receiving the I/Q data 206 and a difference path 340 receiving the I/Q data 206.

The sum path 310 includes an in-phase adder 320 and a quadrature adder 330 for processing the I data and the Q data of the I/Q data 206, respectively. In the in-phase adder 320, the I data is added 322 to a previous version of the I data. A time delay 321 is used to provide the previous version of the I data. The time delay 321 may delay the I data by one data bit periods. In the quadrature adder 330, the Q data is added 332 to a previous version of the Q data. A time delay 331 is used to provide the previous version of the Q data. The time delay 331 may delay the Q data by one data bit periods. The difference path 310 further includes an absolute value combination logic 311 to produce the absolute value Mag_S 312 of the I data processed by in-phase adder 320 and the Q data processed by quadrature adder 330.

The difference path 340 includes an in-phase adder 350 and a quadrature adder 360 for filtering the I data and the Q data of the I/Q data 206, respectively. In the in-phase adder 350, a previous version of the I data is subtracted 352 from the I data. A time delay 351 is used to provide the previous version of the I data. The time delay 351 may delay the I data by one data bit periods. In the quadrature adder 360, a previous version of the Q data is subtracted 362 from the Q data. A time delay 361 is used to provide the previous version of the Q data. The time delay 361 may delay the Q data by one data bit periods. The sum path 340 further includes an absolute value combination logic 341 to produce the absolute value Mag_D 342 of the I data processed by in-phase adder 350 and the Q data processed by quadrature adder 360.

The ME 300 further includes a data bit and bit confidence calculator 370 receiving the Mag_S 312 and the Mag_D 342 and producing a confidence value 371 as described in the following. The confidence value 371 and the data bits/packet 372 may be provided to the PE and may be processed by the PE as described below with respect to Fig. 4.

Mag_D is the absolute of the 'I' difference and 'Q' difference, i.e. the absolute value of the in-phase adder 350 output and the quadrature adder 360 output. Similarly, Mag_S is the absolute of the sums of 'I' and sums of 'Q', i.e. the absolute value of the in-phase adder 320 output and the quadrature adder 330 output.

The computation of the bit confidence along with data bits may be performed in one exemplary implementation according to the following scheme:

```
       Bit transition → if Mag_D > Mag_S
       No transition → if Mag_D <= Mag_S
       Bit Confidence (quantized)
             If transition,
                  Mag_D > K*Mag_S → good, else bad
             If no transition,
                  Mag_S > K*Mag_D → good, else bad.
```

Note that this calculation is exemplary. There may be other ways of computing K. In general, K represents some mathematical function involving I and Q and its derivatives.

Mag_D 342 is the output signal of the difference path 340, Mag_S 312 is the output signal of the sum path 310. In an exemplary implementation as described in the following, a bit transition is detected if Mag_D>Mag_S or otherwise, if Mag_D<=Mag_S no bit transition is detected. In the case that a transition is detected, if Mag_D>K times Mag_S, the confidence value is good, else bad. In the case that no transition is detected, if Mag_S>K times Mag_D, the confidence value is good, else bad. K is a constant, e.g. an integer value, for example K=1,2,3,4, etc. K can also dynamically vary.

The bit confidence gives an indication on how good the transition or no transition is, considering the effect of noise.

A good confidence value may be a confidence value that is above a threshold, for example a threshold of 0.5. Then confidence values, for example in the range between 0 and 0.5 represent bad confidence values and confidence values, for example in the range between 0.5 and 1 represent good confidence values. In one example the confidence value may be binary, for example 0 representing a bad confidence value and 1 representing a good confidence value.

The ME 300 further includes a parity calculator 380 for producing a parity of the I/Q data bits which may be provided to PE and may be processed by the PE as described below with respect to Fig. 4.

The parity calculator 380 may check a parity of the I/Q data bits by, e.g., checking if the total number of 1-bits in the I/Q data bits is even or odd. A parity bit, or check bit, is a bit added to a string of binary code to ensure that the total number of 1-bits in the string is even or odd. Parity bits are used as the simplest form of error detecting code. They key point about Parity is that they can tell you if there is an error, but they can't tell you if the data is good. Some combinations of bad data bits can combine to give a false positive pass. The strength of a parity algorithm is dictated how often false positives can occur. There are different implementations for parity check in GNSS. For example, in GPS according to the specification https://www.navcen.uscg.gov/pubs/gps/icd200/ICD200Cw1234.pdf on page 135; in GLONASS according to the specification http://gauss.gge.unb.ca/GLONASS.ICD.pdf on page 42 (4.7 Data verification algorithm) or in Beidou, the China navigation system, according to the specification http://www.beidou.gov.cn/attach/2013/12/26/20131226b8a6182fa7 3a4ab3a5f107f762283712.pdf on page 11 (5.1.3 Data Error Correction Coding Mode).

Fig. 4 is a block diagram illustrating an exemplary positioning unit (PU) 400 of a GNSS receiver according to the disclosure.

The PE 400 receives the data packet 372. The PE 400 further receives the confidence value 371 as processed by the ME 300 as described above with respect to Fig. 2 as input. The PE 400 further receives the parity 381 as processed by the ME 300 as described above with respect to Fig. 2 as input.

In the PE 400, the data packet 372 is checked by a parity check 401, a confidence check 402 and a consistency check 403. The parity check 401, which receives the parity 381 determined by the ME 300 as input, checks the parity of the data packet 372, i.e. if the data packet 372 has a parity that corresponds with the parity 381 determined by the ME 300 as described above with respect to Fig. 3. If the parity check has failed, the data packet 372 is discarded. If the parity check has passed, the data packet 372 is checked by a confidence check 402, which receives the confidence value 371 determined by ME 300 as input. The confidence check 402 may check if the confidence value 371 is acceptable, for example above a threshold, e.g. as described above with respect to Fig. 3. The confidence check 402 may be based on an evaluation of the confidence values 371 of one or more or all of the bits of the navigation message data packet 503. Many different ways of evaluating the confidence values 371 are possible. The confidence check 402 may, e.g., determine the number of bits of the navigation message data packet 503 having a confidence value 371 that is above a threshold. The result of the confidence check 402 (passed/failed) may then be determined based on the evaluation result (e.g. the number of bits of the navigation message data packet 503 having a confidence value 371 that is above a threshold).

If the confidence check 402 has passed, data (data packet 372) can be readily used 405, i.e. used for determining the positioning data. No waiting for a similar data packet 372 is necessary. If the confidence check 402 has failed, the data packet 372 is checked by a consistency check 403, which receives a previous data packet 411, i.e. the data packet 372 at a previous time, as input. The consistency check 403 compares the single bits of the data packet 372 against the single bits of the previous data packet 411. If the bit comparison results that both data packets 372, 411 are identical or change in a predictable way, for e.g., time stamp bits, the consistency check 403 has passed and data (i.e. the data packet 372) can be used 406, i.e. used for determining the positioning data. Otherwise, data is discarded 404.

Determining positioning data can be performed for example as described in the following for the GPS system: Each GPS satellite continually broadcasts a signal (carrier wave with modulation) that includes a pseudorandom code (sequence of ones and zeros) that is known to the receiver. By time-aligning a receiver-generated version and the receiver-measured version of the code, the time of arrival (TOA) of a defined point in the code sequence, called an epoch, can be found in the receiver clock time scale. The signal further includes a message that includes the time of transmission (TOT) of the code epoch (in GPS time scale) and the satellite position at that time. Conceptually, the receiver measures the TOAs (according to its own clock) of four satellite signals. From the TOAs and the TOTs, the receiver forms four time of flight (TOF) values which are (given the speed of light) approximately equivalent to receiver-satellite range differences. The receiver then computes its three-dimensional position and clock deviation from the four minimum of TOFs.More satellites are generally used for better accuracy and reliability.

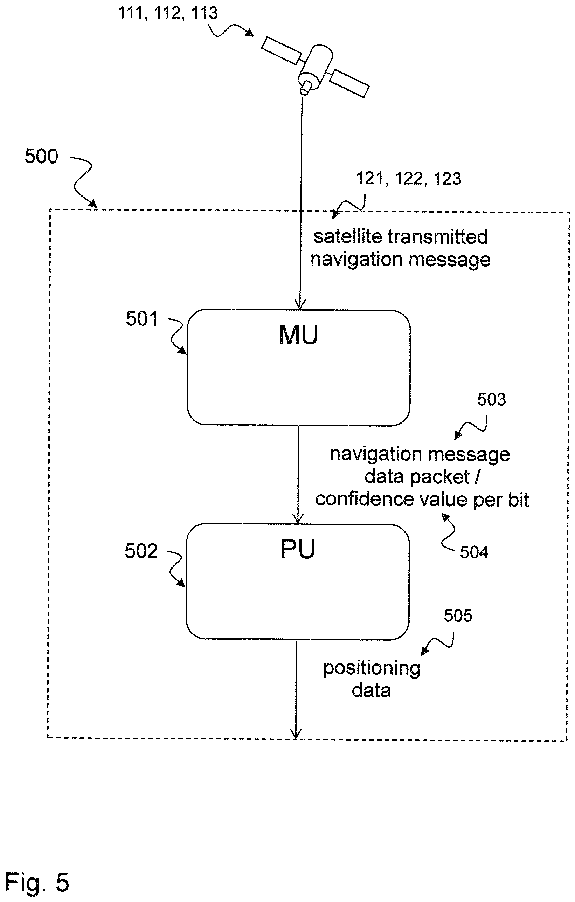

Fig. 5 is a block diagram illustrating an exemplary GNSS receiver 500 according to the disclosure. The GNSS receiver 500 describes a high-level representation of the GNSS receiver 200 described above with respect to Fig. 2. The GNSS receiver 500 includes a measurement unit (MU) 501 and a positioning unit (PU) 502. The MU 501 is a high-level representation of the MU 220, 300 described above with respect to Figures 2 and 3. The PU 502 is a high-level representation of the PE 400 described above with respect to Figure 4. The GNSS receiver 500 may comprise a processor including the ME and the PE. The processor may be implemented as a multi-processor system, e.g. multiple CPUs or as a single-processor system, e.g. a single CPU. The ME functionality and the PE functionality may be implemented in hardware and/or software. The GNSS receiver 500 may be a Software GNSS receiver or a hardware GNSS receiver or a mixed software/hardware implementation. Note that there is no strict ME versus PE split. Some functionality as described in this disclosure can run on the ME, other functionality can run on the PE. For example, in one implementation parity can be computed in the ME and PE checks that the parity has passed. In another implementation parity can be computed in the PE. The architectural split between GNSS ME and PE activities can be blurred depending on the implementation and some activities can be moved back and forth over the boundaries. ME may be implemented in Hardware and/or Software, and although PE is usually implemented in SW it is not inconceivable to do most of it in Hardware. If activities are done in Software, they may be spread around several CPUs or may all done on the same CPU.

The MU 501 is configured to process a GNSS satellite transmitted navigation message 121, 122, 123 received from at least one respective satellite vehicle 111, 112, 113 to provide a navigation message data packet 503 and to determine for each data bit of the navigation message data packet 503 a respective confidence value 504. The satellite transmitted navigation message 121, 122, 123 may correspond to the incoming signal 201 and the navigation message data packet 503 may correspond to the data packet 372 described above with respect to Figures 2 to 4. The confidence value 504 may correspond to the confidence value 371 described above with respect to Figures 3 and 4.

The PU 502 is configured to determine positioning data 505 based on the data bits of the navigation message data packet 503 along with their respective confidence values 504, e.g. as described above with respect to Fig. 4.

The PU 502 may use a navigation message data packet 503 for determining the positioning data 505 based on the confidence values 504 of at least one data bit of the navigation message data packet 503. The PU 502 may use a navigation message data packet 503 based on a number of bits of the navigation message data packet 503 having a confidence value 504 that is above a threshold, e.g. as described above with respect to Figures 3 and 4. By way of example, if the number of bits of the navigation message data packet 503 having a confidence value 504 that is above a threshold is equal to or greater than a packet confidence lower limit, then the confidence check has passed, otherwise failed.

The PU 502 may apply a consistency check, e.g. a consistency check 403 as described above with respect to Figure 4, to the navigation message data packet 503 before using the navigation message data packet 503 for determining the positioning data 505 if a confidence check, e.g. a confidence check 402 as described above with respect to Figure 4, based on the confidence values 504 of at least one data bit of the navigation message data packet 503 has been failed. The consistency check may include a comparison of the navigation message data packet 503 with a previous navigation message data packet, e.g. a previous data packet 411 as described above with respect to Figure 4.

The consistency check may be based on a majority voting scheme. A majority is the greater part, or more than half, of the total. It is a subset of a set consisting of more than half of the set's elements. Majority can be used to specify the voting requirement, as in a "majority vote". A majority vote is more than half of the votes cast.

The PU 502 may apply a parity check, e.g. a parity check 401 as described above with respect to Figure 4, to the navigation message data packet 503 before determining the respective confidence values 504. The PU 502 may discard a navigation message data packet 503 for which the parity check has failed. The PU 502 may discard a navigation message data packet 503 for which the parity check has been passed, the confidence check has been failed and the consistency check has been failed, e.g. according to the block diagram of Fig. 4. The PU 502 may accept a navigation message data packet 503 for which the parity check and the confidence check have been passed, e.g. according to the block diagram of Fig. 4. The PU 502 may accept a navigation message data packet for which the parity check has been passed, the confidence check has been failed and the consistency check has been passed, e.g. according to the block diagram of Fig. 4.

The navigation message data packet 503 may include an in-phase (I) component and a quadrature (Q) component, e.g. as described above with respect to Figs. 2 and 3. The MU 501 may determine the respective confidence values 504 based on the I component and the Q component of the navigation message data packet 503.

The MU 501 may determine the respective confidence values 504 based on a difference magnitude Mag_D 342 and a sum magnitude Mag_S 312 with respect to the I component and the Q component, e.g. as described above with respect to Fig. 3. The Mag_D for a specific bit of the navigation message data packet 503 may be based on an I difference and a Q difference. The I difference is a difference between the I component of the navigation message data packet 503 and the I component of the navigation message data packet 503 at a previous time instance. The Q difference is a difference between the Q component of the navigation message data packet and the Q component of the navigation message data packet at a previous time instance, e.g. as described above with respect to Figure 3. The MU 501 may determine Mag_D as an absolute value of the I difference and the Q difference, e.g. as described above with respect to Figure 3.

Mag_S for a specific bit of the navigation message data packet 503 may be based on an I sum and a Q sum. The I sum is a sum of the I component of the navigation message data packet 503 and the I component of the navigation message data packet 503 at a previous time instance. The Q sum is a sum of the Q component of the navigation message data packet 503 and the Q component of the navigation message data packet 503 at a previous time instance.

The MU 501 may determine Mag_S as an absolute value of the I sum and the Q sum, e.g. as described above with respect to Figure 3. The MU 501 may detect a bit transition for the specific bit of the navigation message data packet if Mag_D is greater than Mag_S, e.g. as described above with respect to Figure 3. The MU 501 may determine the confidence value 504 for the specific bit of the navigation message data packet 503 based on a detected bit transition for the specific bit, e.g. as described above with respect to Figure 3.

In the case of a detected bit transition, the MU 501 may determine a high confidence value for the specific bit if Mag_D is greater than K times Mag_S and may determine a low confidence value for the specific bit if Mag_D is smaller than K times Mag_S, e.g. as described above with respect to Figure 3. In the case of no detected bit transition, the MU 501 may determine a high confidence value for the specific bit if Mag_S is greater than K times Mag_D and may determine a low confidence value for the specific bit if Mag_S is smaller than K times Mag_D.

The MU 501 may determine a parity of the navigation message data packet, e.g. as described above with respect to Figure 3. The PU 502 may apply a parity check to the navigation message data packet 503. The parity check may be based on the parity determined by the MU 501, e.g. as described above with respect to Figures 3 and 4.

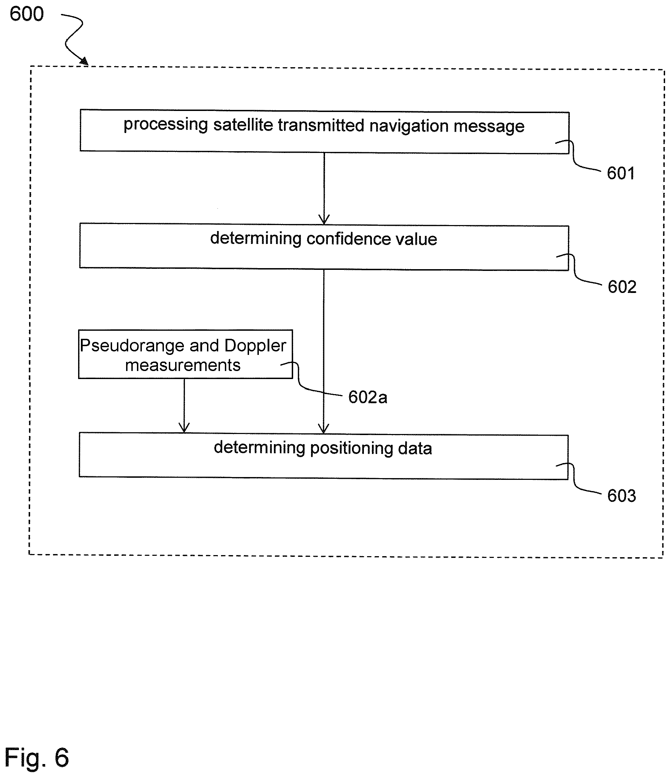

Fig. 6 is a schematic diagram illustrating an exemplary method 600 for determining positioning data according to the disclosure. The method 600 implements the functionality of the GNSS receiver 500 described above with respect to Fig. 5.

The method 600 includes processing 601 a GNSS satellite transmitted navigation message, e.g. a message 121, 122, 123 as described above with respect to Fig. 5, received from at least one respective satellite vehicle to provide a navigation message data packet, e.g. a data packet 503 as described above with respect to Fig. 5.

The method 600 includes determining 602 for each data bit of the navigation message data packet a respective confidence value, e.g. a confidence value 504 as described above with respect to Fig. 5. The method 600 further includes determining Pseudo-range and Doppler measurements 602a.

The method 600 further includes determining 603 positioning data based on the data bits of the navigation message data packet along with their respective confidence values, e.g. as described above with respect to Fig. 5 and based on the Pseudo-range and Doppler measurements.

The method 600 may further include: using a navigation message data packet for determining the positioning data based on the confidence values of at least one data bit of the navigation message data packet. The method 600 may further include: using a navigation message data packet based on a number of bits of the navigation message data packet having a confidence value that is above a threshold. The method 600 may further include: applying a consistency check to the navigation message data packet before using the navigation message data packet for determining the positioning data if a confidence check based on the confidence values of at least one data bit of the navigation message data packet has been failed.

The consistency check may include a comparison of the navigation message data packet with a previous navigation message data packet. The consistency check may be based on a majority voting scheme. The method 600 may further include: applying a parity check to the navigation message data packet before determining the respective confidence values. The method 600 may further include: discarding a navigation message data packet for which the parity check has failed. The method 600 may further include: discarding a navigation message data packet for which the parity check has been passed, the confidence check has been failed and the consistency check has been failed. The method 600 may further include: accepting a navigation message data packet for which the parity check and the confidence check have been passed. The method 600 may further include: accepting a navigation message data packet for which the parity check has been passed, the confidence check has been failed and the consistency check has been passed.

The navigation message data packet may include an in-phase (I) component and a quadrature (Q) component. The method 600 may further include: determining the respective confidence values based on the I component and the Q component of the navigation message data packet.

The method 600 may further include: determining the respective confidence values based on a difference magnitude (Mag_D) and a sum magnitude (Mag_S) with respect to the I component and the Q component. The Mag_D for a specific bit of the navigation message data packet may be based on an I difference and a Q difference, wherein the I difference is a difference between the I component of the navigation message data packet and the I component of the navigation message data packet at a previous time instance, and wherein the Q difference is a difference between the Q component of the navigation message data packet and the Q component of the navigation message data packet at a previous time instance.

The method 600 may further include: determining Mag_D as an absolute value of the I difference and the Q difference. Mag_S for a specific bit of the navigation message data packet may be based on an I sum and a Q sum, wherein the I sum is a sum of the I component of the navigation message data packet and the I component of the navigation message data packet at a previous time instance, and wherein the Q sum is a sum of the Q component of the navigation message data packet and the Q component of the navigation message data packet at a previous time instance.

The method 600 may further include: determining Mag_S as an absolute value of the I sum and the Q sum. The method 600 may further include: detecting a bit transition for the specific bit of the navigation message data packet if Mag_D is greater than Mag_S. The method 600 may further include: determining the confidence value for the specific bit of the navigation message data packet based on a detected bit transition for the specific bit. The method 600 may further include: determining, in the case of a detected bit transition, a high confidence value for the specific bit if Mag_D is greater than K times Mag_S and a low confidence value for the specific bit if Mag_D is smaller than K times Mag_S. The method 600 may further include: determining, in the case of no detected bit transition, a high confidence value for the specific bit if Mag_S is greater than K times Mag_D and a low confidence value for the specific bit if Mag_S is smaller than K times Mag_D.

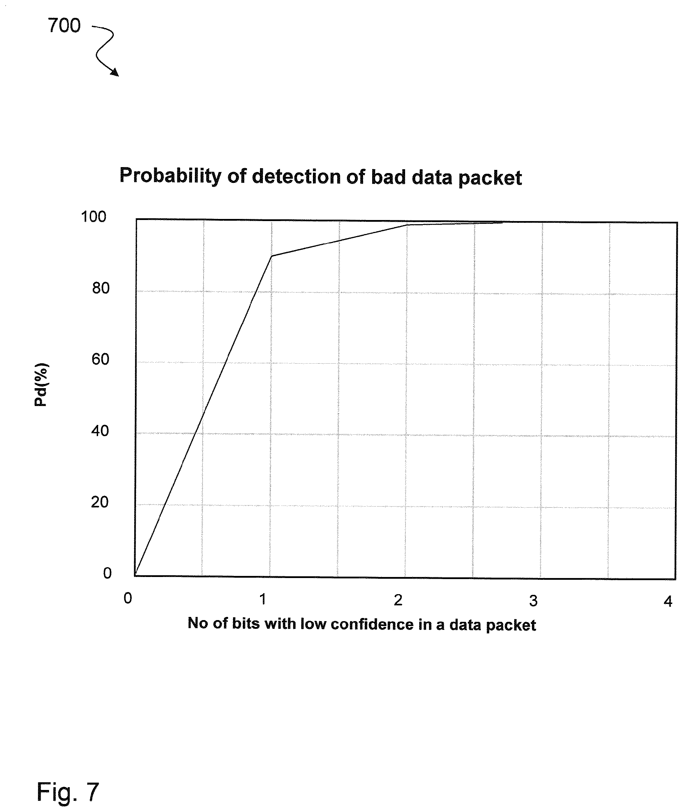

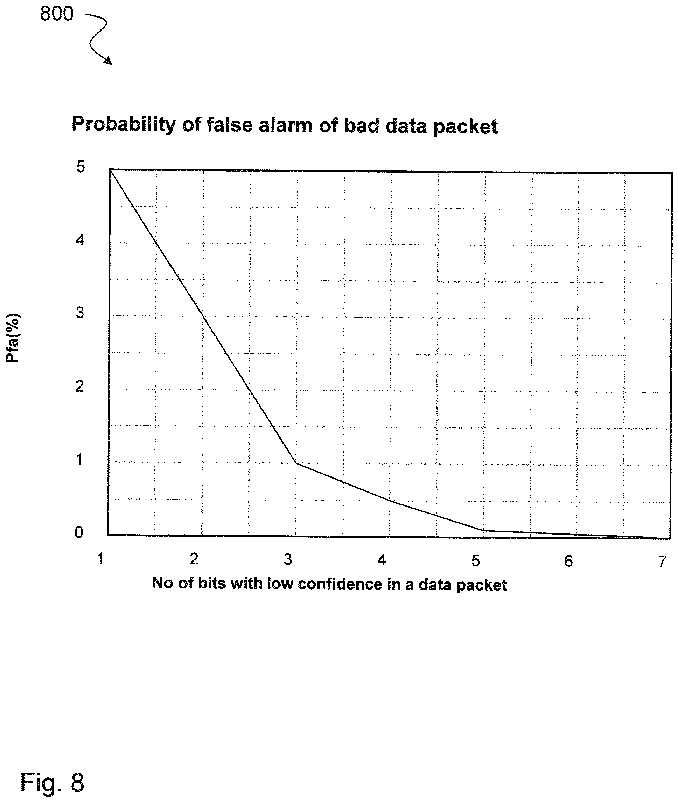

Fig. 7 is an exemplary performance diagram 700 illustrating probability of detection of bad data packet by a GNSS receiver 200 according to the disclosure. Fig. 8 is an exemplary performance diagram 800 illustrating probability of false alarm of bad data packet by a GNSS receiver 200 according to the disclosure.

As described above, for solutions that purely rely on the parity algorithm to check the data and majority voting in some cases, the parity algorithm fails when there are multiple data bit errors and majority voting scheme delays the position calculation. If the receiver ends up using broken data, it can lose the ability to track satellites, compute incorrect user position, and become an unstable system. By using the data based on the confidence of the data as described in this disclosure, unnecessary delay under good signal strength can be eliminated, but at the same time it can be ensured that broken data is not used. Figures 7 and 8 show the results of applying confidence values according to the disclosure. A data packet has transmitted data along with parity. In the graph depicted in Fig 7, it can be seen that as the number of low confidence bits increase, the probability of falsely marking a good data packet as bad goes down. In the graph depicted in Fig 7, it can be seen that similarly, the detection probability of a bad data packet which was missed by parity algorithm increases with increase in low confidence bits.

The techniques described in this disclosure may be applied to any broadcast devices that use periodic data and use a simple parity which may suffer from false positives. The techniques described in the disclosure are particularly important for phone designs with poor GNSS antennas making received signal typically 12dB lower, for example. The techniques of this disclosure can be particularly applied to wearables that due to size constraints have very poor antennas leading up to typically a further 15dB weaker signal. User applications, such as fitness tracking and swimming makes GNSS signal reception even tougher and hence the data decoding is prone to more frequent false positive errors. In such scenarios the techniques according to this disclosure provide significant improvements.

The devices, systems and methods described in this disclosure may be implemented as Digital Signal Processors (DSP), micro-controllers or any other side-processor or hardware circuit on a chip or an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the blocks described above with respect to Figures 2 to 5 and the method 600 described above with respect to Fig. 6. Such a computer program product may include a non-transient readable storage medium storing program code thereon for use by a processor, the program code comprising instructions for performing the methods or the computing blocks as described above.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. A positioning receiver, comprising a processor, configured to:
process a satellite transmitted navigation message from at least one respective satellite vehicle (111, 112, 113) to provide a navigation message data packet (372) and to determine for each data bit of the navigation message data packet (372) a respective confidence value which gives an indication on how good a bit transition or no bit transition from a previous version of the data bit is, considering the effect of noise;
determine positioning data based on the data bits of the navigation message data packet (372) and respective confidence values;
apply a confidence check (402) to the navigation message data packet (372) before determining the positioning data, wherein the confidence check (402) is based on the confidence values of at least one data bit of the navigation message data packet (372), **characterized in that** the processor is further configured to
apply a consistency check (403) to the navigation message data packet (372) before determining the positioning data if the confidence check (402) based on the confidence values of the at least one data bit of the navigation message data packet (372) failed..

2. The positioning receiver of claim 1,
wherein the confidence check (402) comprises granting use of a navigation message data packet (372) based on a number of bits of the navigation message data packet (372) having a confidence value above a threshold.

3. The positioning receiver of claim 1 or 2,
wherein the consistency check (403) comprises comparing the navigation message data packet (372) with a previous navigation message data packet.

4. The positioning receiver of one of the preceding claims,
wherein the consistency check (403) is based on a majority voting scheme.

5. The positioning receiver of one of the preceding claims,
wherein the processor is configured to apply a parity check (401) to the navigation message data packet (372) before applying the confidence check (402) to the navigation message data packet.

6. The positioning receiver of claim 5,
wherein the processor is configured to discard a navigation message data packet (372) for which the parity check (401) failed.

7. The positioning receiver of claim 5,
wherein the processor is configured to discard a navigation message data packet for which the parity check (401) passed, the confidence check (402) failed and the consistency check (403) failed.

8. The positioning receiver of one of claims 5 to 7,
wherein the processor is configured to accept a navigation message data packet (372) for which the parity check (401) and the confidence check (402) passed.

9. The positioning receiver of one of claims 5 to 7,
wherein the processor is configured to accept a navigation message data packet (372) for which the parity check (401) passed, the confidence check (402) failed and the consistency check (403) passed.

10. The positioning receiver of one of the preceding claims,
wherein the navigation message data packet comprises an in-phase (I) component and a quadrature (Q) component; and
wherein the processor is configured to determine the respective confidence values based on the I component and the Q component of the navigation message data packet.

11. A method for determining positioning data, the method comprising:
processing a satellite transmitted navigation message from at least one respective satellite vehicle (111, 112, 113) to provide a navigation message data packet(372);
determining for each data bit of the navigation message data packet a respective confidence value which gives an indication on how good a bit transition or no bit transition from a previous version of the data bit is, considering the effect of noise;
determining positioning data based on the data bits of the navigation message data packet (372) and respective confidence values;
applying a confidence check (402) to the navigation message data packet (372) before determining the positioning data, wherein the confidence check (402) is based on the confidence values of at least one data bit of the navigation message data packet(372); **characterized by**
applying a consistency check (403) to the navigation message data packet (372) before determining the positioning data if the confidence check (402) based on the confidence values of the at least one data bit of the navigation message data packet (372) failed.

12. The method of claim 11, wherein the consistency check comprises a comparison of the navigation message data packet (372) with a previous navigation message data packet.

13. The method of claim 11 or 12, wherein that the consistency check (403) is based on a majority voting scheme.

14. A computer readable non-transitory medium on which computer instructions are stored to cause the device of any of claims 1 to 10 to perform the method of one of claims 11 to 13.

## Patentansprüche

1. Positionierungsempfänger, der einen Prozessor enthält, der konfiguriert ist zum:
Verarbeiten einer von Satelliten gesendeten Navigationsnachricht von wenigstens einem entsprechenden Satellitenfahrzeug (111, 112, 113), um ein Navigationsnachricht-Datenpaket (372) bereitzustellen und um für jedes Datenbit des Navigationsnachricht-Datenpakets (372) einen entsprechenden Vertrauenswert zu bestimmen, der eine Angabe darüber macht, wie gut ein Bitübergang oder kein Bitübergang von einer vorherigen Version des Datenbits unter Berücksichtigung der Wirkung des Rauschens ist;
Bestimmen von Positionierungsdaten anhand der Datenbits des Navigationsnachricht-Datenpakets (372) und entsprechender Vertrauenswerte;
Anwenden einer Vertrauensprüfung (402) auf das Navigationsnachricht-Datenpaket (372) vor dem Bestimmen der Positionierungsdaten, wobei die Vertrauensprüfung (402) auf den Vertrauenswerten wenigstens eines Datenbits des Navigationsnachricht-Datenpakets (372) beruht, **dadurch gekennzeichnet, dass** der Prozessor ferner konfiguriert ist zum
Anwenden einer Konsistenzprüfung (403) auf das Navigationsnachricht-Datenpaket (372) vor dem Bestimmen der Positionierungsdaten, falls die Vertrauensprüfung (402), die auf den Vertrauenswerten des wenigstens einen Datenbits des Navigationsnachricht-Datenpakets (372) beruht, scheitert.

2. Positionierungsempfänger nach Anspruch 1,
wobei die Vertrauensprüfung (402) das Gewähren der Verwendung eines Navigationsnachricht-Datenpakets (372) anhand einer Anzahl von Bits des Navigationsnachricht-Datenpakets (372), die einen Vertrauenswert oberhalb eines Schwellenwertes besitzen, umfasst.

3. Positionierungsempfänger nach Anspruch 1 oder 2,
wobei die Konsistenzprüfung (403) das Vergleichen des Navigationsnachricht-Datenpakets (372) mit einem früheren Navigationsnachricht-Datenpaket umfasst.

4. Positionierungsempfänger nach einem der vorhergehenden Ansprüche,
wobei die Konsistenzprüfung (403) auf einem Mehrheitsbeschluss-Schema beruht.

5. Positionierungsempfänger nach einem der vorhergehenden Ansprüche,
wobei der Prozessor konfiguriert ist, eine Paritätsprüfung (401) auf das Navigationsnachricht-Datenpaket (372) anzuwenden, bevor die Vertrauensprüfung (402) auf das Navigationsnachricht-Datenpaket angewendet wird.

6. Positionierungsempfänger nach Anspruch 5,
wobei der Prozessor konfiguriert ist, ein Navigationsnachricht-Datenpaket (372), für das die Paritätsprüfung (401) gescheitert ist, zu verwerfen.

7. Positionierungsempfänger nach Anspruch 5,
wobei der Prozessor konfiguriert ist, ein Navigationsnachricht-Datenpaket, für das die Paritätsprüfung (401) bestanden wurde, die Vertrauensprüfung (402) gescheitert ist und die Konsistenzprüfung (403) gescheitert ist, zu verwerfen.

8. Positionierungsempfänger nach einem der Ansprüche 5 bis 7,
wobei der Prozessor konfiguriert ist, ein Navigationsnachricht-Datenpaket (372), für das die Paritätsprüfung (401) und die Vertrauensprüfung (402) bestanden wurden, zu akzeptieren.

9. Positionierungsempfänger nach einem der Ansprüche 5 bis 7,
wobei der Prozessor konfiguriert ist, ein Navigationsnachricht-Datenpaket (372), für das die Paritätsprüfung (401) bestanden wurde, die Vertrauensprüfung (402) gescheitert ist und die Konsistenzprüfung (403) bestanden wurde, zu akzeptieren.

10. Positionierungsempfänger nach einem der vorhergehenden Ansprüche,
wobei das Navigationsnachricht-Datenpaket eine Inphase-Komponente (I-Komponente) und eine Quadratur-Komponente (Q-Komponente) enthält; und
wobei der Prozessor konfiguriert ist, die entsprechenden Vertrauenswerte anhand der I-Komponente und der Q-Komponente des Navigationsnachricht-Datenpakets zu bestimmen.

11. Verfahren zum Bestimmen von Positionierungsdaten, wobei das Verfahren Folgendes umfasst:
Verarbeiten einer von Satelliten gesendeten Navigationsnachricht von wenigstens einem entsprechenden Satellitenfahrzeug (111, 112, 113), um ein Navigationsnachricht-Datenpaket (372) bereitzustellen;
Bestimmen für jedes Datenbit des Navigationsnachricht-Datenpakets eines entsprechenden Vertrauenswertes, der eine Angabe darüber macht, wie gut ein Bitübergang oder kein Bitübergang von einer vorhergehenden Version des Datenbits unter Berücksichtigung der Wirkung des Rauschens ist;
Bestimmen von Positionierungsdaten anhand der Datenbits des Navigationsnachricht-Datenpakets (372) und entsprechender Vertrauenswerte;
Anwenden einer Vertrauensprüfung (402) auf das Navigationsnachricht-Datenpaket (372) vor dem Bestimmen der Positionierungsdaten, wobei die Vertrauensprüfung (402) auf den Vertrauenswerten des wenigstens einen Datenbits des Navigationsnachricht-Datenpakets (372) beruht; **gekennzeichnet durch**
Anwenden einer Konsistenzprüfung (403) auf das Navigationsnachricht-Datenpaket (372) vor dem Bestimmen der Positionierungsdaten, falls die Vertrauensprüfung (402), die auf den Vertrauenswerten des wenigstens einen Datenbits des Navigationsnachricht-Datenpakets (372) beruht, gescheitert ist.

12. Verfahren nach Anspruch 11, wobei die Konsistenzprüfung ein Vergleichen des Navigationsnachricht-Datenpakets (372) mit einem früheren Navigationsnachricht-Datenpaket umfasst.

13. Verfahren nach Anspruch 11 oder 12, wobei die Konsistenzprüfung (403) auf einem Mehrheitsbeschluss-Schema beruht.

14. Computerlesbares nicht transitorisches Medium, auf dem Computerbefehle gespeichert sind, um die Vorrichtung nach einem der Ansprüche 1 bis 10 dazu zu veranlassen, das Verfahren nach einem der Ansprüche 11 bis 13 auszuführen.

## Revendications

1. Récepteur de positionnement, comprenant un processeur, configuré pour :
traiter un message de navigation transmis par satellite à partir d'au moins un véhicule satellite respectif (111, 112, 113) pour fournir un paquet de données de message de navigation (372) et pour déterminer pour chaque bit de données du paquet de données de message de navigation (372) une valeur de confiance respective qui donne une indication sur la qualité d'une transition de bit ou de l'absence de transition de bit à partir d'une version précédente du bit de données, en tenant compte de l'effet du bruit ;
déterminer les données de positionnement sur la base des bits de données du paquet de données de message de navigation (372) et des valeurs de confiance respectives ;
appliquer un contrôle de confiance (402) au paquet de données de message de navigation (372) avant de déterminer les données de positionnement, le contrôle de confiance (402) étant basé sur les valeurs de confiance d'au moins un bit de données du paquet de données de message de navigation (372), **caractérisé en ce que** le processeur est en outre configuré pour
appliquer un contrôle de cohérence (403) au paquet de données de message de navigation (372) avant de déterminer les données de positionnement si le contrôle de confiance (402) basé sur les valeurs de confiance d'au moins un bit de données du paquet de données de message de navigation (372) a échoué.

2. Récepteur de positionnement selon la revendication 1,
le contrôle de confiance (402) comprenant l'octroi de l'utilisation d'un paquet de données de message de navigation (372) sur la base d'un nombre de bits du paquet de données de message de navigation (372) ayant une valeur de confiance supérieure à un seuil.

3. Récepteur de positionnement selon la revendication 1 ou 2,
le contrôle de cohérence (403) comprenant la comparaison du paquet de données de message de navigation (372) avec un précédent paquet de données de message de navigation.

4. Récepteur de positionnement selon l'une des revendications précédentes,
le contrôle de cohérence (403) étant basé sur un schéma de vote majoritaire.

5. Récepteur de positionnement selon l'une des revendications précédentes,
le processeur étant configuré pour appliquer un contrôle de parité (401) au paquet de données de message de navigation (372) avant d'appliquer le contrôle de confiance (402) au paquet de données de message de navigation.

6. Récepteur de positionnement selon la revendication 5,
le processeur étant configuré pour rejeter un paquet de données de message de navigation (372) pour lequel le contrôle de parité (401) a échoué.

7. Récepteur de positionnement selon la revendication 5,
le processeur étant configuré pour rejeter un paquet de données de message de navigation pour lequel le contrôle de parité (401) a réussi, le contrôle de confiance (402) a échoué et le contrôle de cohérence (403) a échoué.

8. Récepteur de positionnement selon l'une des revendications 5 à 7,
le processeur étant configuré pour accepter un paquet de données de message de navigation (372) pour lequel le contrôle de parité (401) et le contrôle de confiance (402) ont réussi.

9. Récepteur de positionnement selon l'une des revendications 5 à 7,
le processeur étant configuré pour accepter un paquet de données de message de navigation (372) pour lequel le contrôle de parité (401) a réussi, le contrôle de confiance (402) a échoué et le contrôle de cohérence (403) a réussi.

10. Récepteur de positionnement selon l'une des revendications précédentes,
le paquet de données de message de navigation comprenant une composante en phase (I) et une composante en quadrature (Q) ; et
le processeur étant configuré pour déterminer les valeurs de confiance respectives sur la base de la composante I et de la composante Q du paquet de données de message de navigation.

11. Procédé pour déterminer des données de positionnement, le procédé comprenant :
le traitement d'un message de navigation transmis par satellite à partir d'au moins un véhicule satellite respectif (111, 112, 113) pour fournir un paquet de données de message de navigation (372) ;
la détermination, pour chaque bit de données du paquet de données de message de navigation, d'une valeur de confiance respective qui donne une indication sur la qualité d'une transition de bit ou de l'absence de transition de bit par rapport à une version précédente du bit de données, en tenant compte de l'effet du bruit ;
la détermination des données de positionnement sur la base des bits de données du paquet de données de message de navigation (372) et de valeurs de confiance respectives ;
l'application d'un contrôle de confiance (402) au paquet de données de message de navigation (372) avant de déterminer les données de positionnement, le contrôle de confiance (402) étant basé sur les valeurs de confiance d'au moins un bit de données du paquet de données de message de navigation (372) ; **caractérisé par**
l'application d'un contrôle de cohérence (403) au paquet de données de message de navigation (372) avant de déterminer les données de positionnement si le contrôle de confiance (402) basé sur les valeurs de confiance de l'au moins un bit de données du paquet de données de message de navigation (372) a échoué.

12. Procédé selon la revendication 11, le contrôle de cohérence comprenant une comparaison du paquet de données de message de navigation (372) avec un paquet de données de message de navigation précédent.

13. Procédé selon la revendication 11 ou 12, le contrôle de cohérence (403) étant basé sur un système de vote à la majorité.

14. Support non transitoire lisible par ordinateur sur lequel sont stockées des instructions informatiques pour amener le dispositif selon l'une quelconque des revendications 1 à 10 à effectuer le procédé selon l'une des revendications 11 à 13.
